# EUROPEAN PATENT APPLICATION

(11) **EP 1 205 682 A2**
(43) Date of publication of application: **15.05.2002**
(21) Application number: 01119355.4
(22) Date of filing: 10.08.2001
(51) Int. Cl.: F16D 43/04

(54) **Speed controlled freewheel clutch device**

(30) Priority: 14.11.2000 CN 00133584
(71) Applicant: Liau, Bai-Guang, Erh-Lun Hsiang, Yun-Lin Hsien (TW); Boahsin Industrial Co., Ltd., Ping-Chen City, Tao-Yuan Hsien (TW)
(72) Inventor: Liau, Bai-Guang, Erh Lun Hsiang, Yun Lin Hsien (TW)
(74) Representative: Wehnert, Werner, Dipl.-Ing. Patentanwälte Hauck, Graalfs, Wehnert, Döring, Siemons

(57) **Abstract**

A clutch device includes a sleeve (30) which has recesses (31) and is engaged with an input shaft (20). Each of the recesses has a deep corner (311) and a shallow comer (312), and a roller (50) is received in each of the recesses. A driving disk (60) has a flange (61) enclosing the sleeve. A first ring member (70) and a second ring member (80) are mounted to the sleeve and each of the first ring member and the second ring member has slots (73, 84) which extend toward different directions. The slots in the first and the second ring member have a common space for receiving a ball (91) which is biased by a spring (92). An eccentric force shifts the balls and rotates the first ring member which has blocks (71) to shift the rollers to narrow comers to drive the driving disk.

## Description

### FIELD OF THE INVENTION

The present invention relates to a clutch device using balls movably received in recesses and each recess having two extension portions. The balls are moved by eccentric force to contact and drive another part.

### BACKGROUND OF THE INVENTION

A conventional clutch device generally includes a complicated structure that involves a lot of parts. The input part and the output part are connected and co-rotated by friction therebetween. The friction wear between the input part and the output part wears an amount of material consumption so that the parts are changed frequently. The force that connecting the input part and the output part is not adjustable so that every type of use requires a unique design to meet the needs of the clutch conditions.

### SUMMARY OF THE INVENTION

The clutch device of the present invention comprises an input shaft connected to a power transmission device and an output shaft connected to the input shaft. A sleeve is connected to the input shaft and has recesses each of which has a deep comer and a shallow comer. A plurality of rollers are respectively received in the recesses. A driving disk has a flange extends from a periphery thereof and the sleeve is enclosed by the flange.

A first ring member is rotatably mounted to the sleeve and a plurality pairs of first block and second block extend from a first side of the ring member. Each of the rollers is located between respective one pair of the pairs of first block and second block. A plurality of first slots are defined radially and inclinedly at an angle relative to a radius of the first ring member in a second side of the ring member. A second ring member is fixedly mounted to the sleeve and a plurality of second slots are defined radially and inclinedly at an angle relative to a radius of the second ring member in a side facing the second side of the first ring member. The first slots communicate with the second slots one by one at an end thereof so as to define a common space which communicates with the first slot and the second slot. An annular groove is defined in the side of the second ring member for receiving an annular spring. A plurality of balls are received in the common spaces of the first slots and the second slots. The annular spring biases the balls in the common space of the first slots and the second slots.

The primary object of the present invention is to provide a clutch device that can be functioned at different rotational directions.

The other object of the present invention is to provide a clutch device that can be used with large gear reduction ratio mechanism and will not cause slippery, overheating or sudden shifting.

These and further objects, features and advantages of the present invention will become more obvious from the following description when taken in connection with the accompanying drawings.

### BRIEF DESCRIPTION OF THE DRAWINGS

Fig. 1 is an exploded view to show a clutch device of the present invention;
Fig. 2 is a cross sectional view to show clutch device of the present invention;
Fig. 3 is a cross sectional view to show the first ring member, the second ring member and balls in the slots in the two ring members of the clutch device of the present invention;
Fig. 4 is a plan view to show the balls in the slots are not moved by the eccentric force;
Fig. 5is a plan view to show the balls in the slots are moved by the eccentric force;
Fig. 6 is a plan view to show the rollers in the recesses are moved by the eccentric force to contact the flange of the driving disk;
Fig. 7 is a plan view to show the rollers in the recesses are not moved when the sleeve is not rotated yet;
Fig. 8 is an enlarged plan view to show the rollers in the recesses are moved by the eccentric force to contact the flange of the driving disk;
Fig. 9 shows that gaps are defined between the rectangular block, rectangular retainer and the rectangular hole in the driving disk;
Fig. 10 shows another embodiment of the first blocks and the second blocks clamping the rollers in the recesses in the sleeve;
Fig. 11 shows that the annular spring biases the balls in the slots at a lower position;
Fig. 12 shows a gap defined between the roller and the flange of the driving disk as shown Fig. 10;
Fig. 13 is similar to Fig. 9 but the gaps are located at different orientation, and
Fig. 14 shows that the frame on the sleeve can be made to be one-piece with the sleeve.

### DETAILED DESCRIPTION OF THE PREFERRED EMBODIMENTS

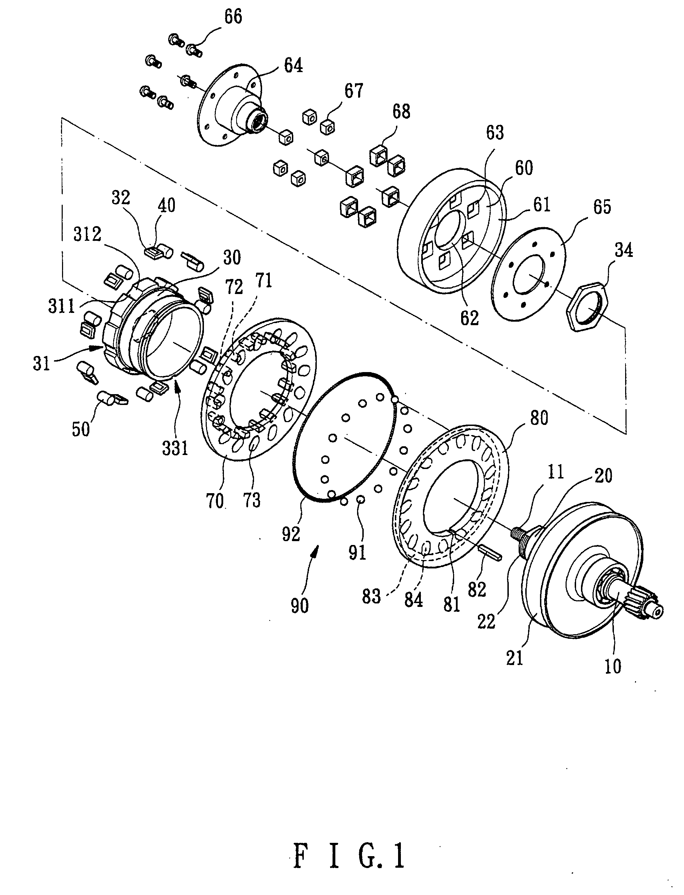

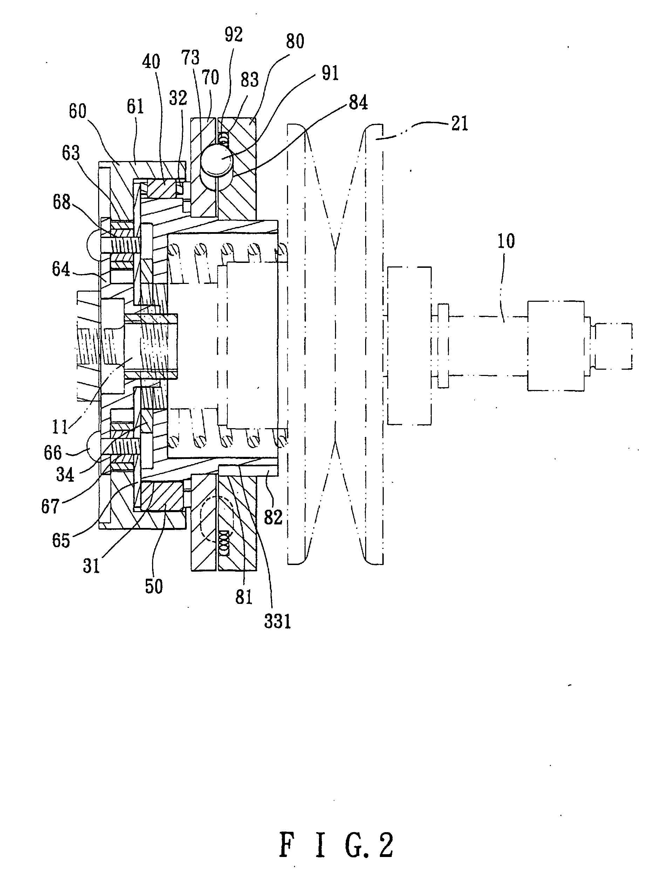

Referring to Figs. 1 and 2, the clutch device of the present invention comprises an input shaft 20 connected to a power transmission device 21 which can be connected to a motor, for example by a belt, to rotate an output shaft 10 which is connected to the input shaft 20 and shares a common axis with the input shaft 20.

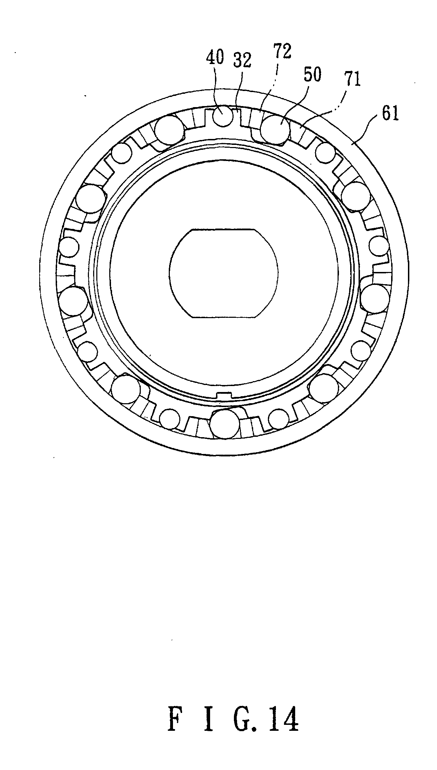

A sleeve 30 mounted to the input shaft 20 by a nut 34 threadedly connected to a threaded section 22 on the input shaft 20, and the sleeve 30 has recesses 31 defined in an outer periphery thereof. Each recess 31 has a deep comer 311 and a shallow comer 312 and either of which receives a roller 50 therein depending on the eccentric force applied to the rollers 50. A driving disk 60 is mounted to the output shaft 10 and a flange 61 extends from a periphery of the driving disk 60. The sleeve 30 is enclosed by the flange 61. A plurality of frames 32 are retained between the 'sleeve 30 and the flange 61 of the driving disk 60. Each of the frames 32 has a rolling member 40 which rotatably contacts an inner periphery of the flange 61 of the driving disk 60. The frames 32 may also be made with the sleeve 30 as a one-piece member as shown in Fig. 14.

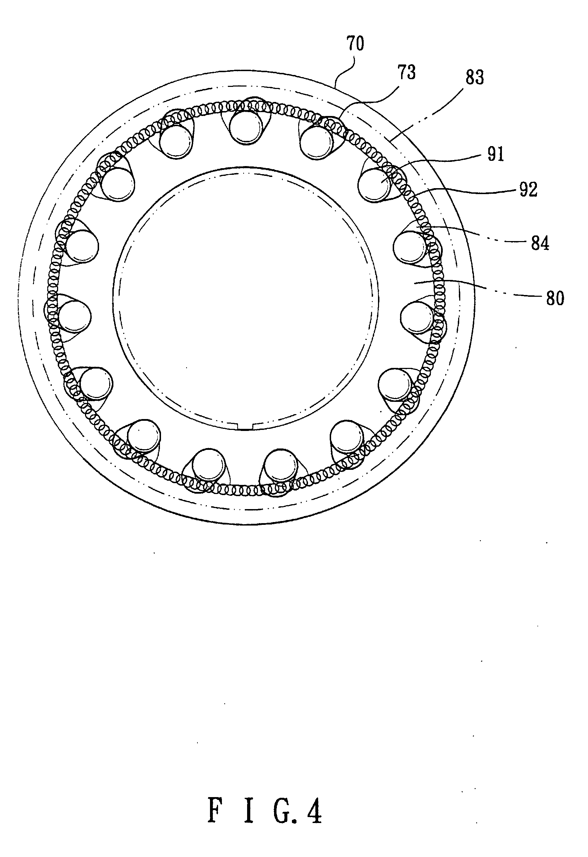

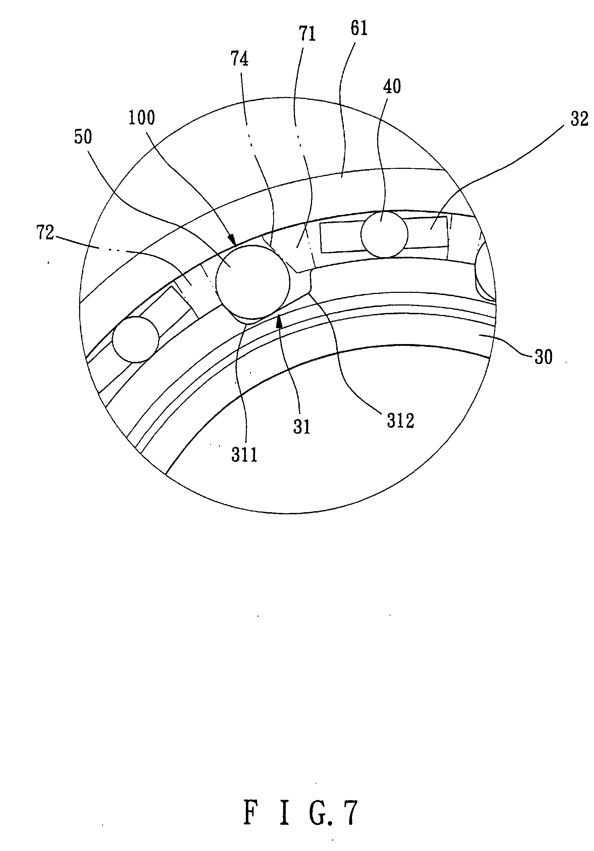

A first ring member 70 is rotatably mounted to the sleeve 30 and a plurality pairs of first block 71 and second block 72 extend from a first side of the ring member 70. Each one of the rollers 50 is located between respective one pair of the pairs of first block 71 and second block 72 as shown in Fig. 7. A plurality of first slots 73 are defined radially and inclinedly at an angle relative to a radius of the first ring member 70 in a second side of the ring member 70. A second ring member 80 is fixedly mounted to the sleeve 30 by inserting a key 82 through a first keyway 331 defined in the sleeve 30 and a second keyway 81 defined in an inner periphery of the second ring member 80. Further referring to Fig. 4, a plurality of second slots 84 are defined radially and inclinedly at an angle relative to a radius of the second ring member 80 and located in a side facing the second side of the first ring member 70. The first slots 73 communicate with the corresponding one of the second slots 84 at two respective ends of the first slot 73 and the second slot 84 so as to define a common space which communicates with the first slot 73 and the second slot 84. An annular groove 83 is defined in the side of the second ring member 80 so as to receive an annular spring 92 of a positioning assembly 90 which comprises a plurality of balls 91 and the annular spring 92. Referring to Fig. 4, the balls 91 are received in the common spaces of the first slots 73 and the second slots 84, and the annular spring 92 biases the balls 91 in the common space of the first slots 73 and the second slots 84 when no eccentric force is applied to the balls 91. As shown in Fig. 7, each of the first blocks 71 is located besides the shallow comer 312 of the recess 31 and has an inclined surface 74 so as to push the roller 50 located in the deep comer 311 in the recess 31 when no eccentric force or a small eccentric force is applied. A gap 100 is defined between the rollers 50 and the flange 61 of the driving disk 60 and the flange 61 only contacts the rolling members 40 when no the rollers 50 are not shifted into the shallow comers 312 to drive the flange 61 of the driving disk 60.

A plurality of rectangular holes 63 are defined through the driving disk 60 and each rectangular hole 63 has a rectangular retainer 68 and a rectangular block 67 received therein, wherein the rectangular block 67 is received in the retainer 68. An end member 64 has a tubular portion extending through a central hole in the driving disk 60 and is fixedly connected to the threaded section 11 of the output shaft 10. A plurality of bolts 66 extend through the end member 64 and the rectangular blocks 67, and are engaged with a plate 65 which is clamped between the driving disk 60 and the sleeve 30.

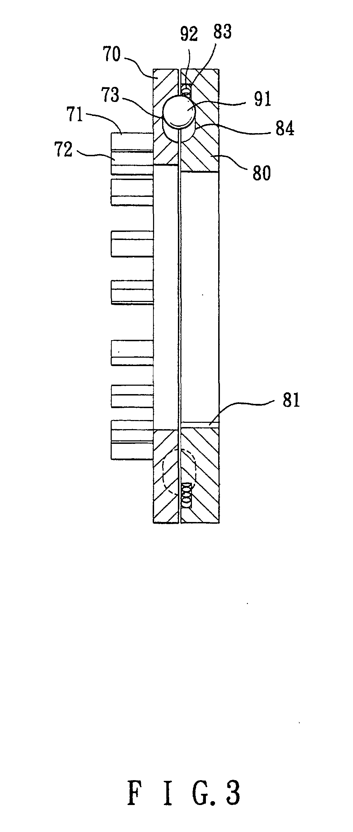

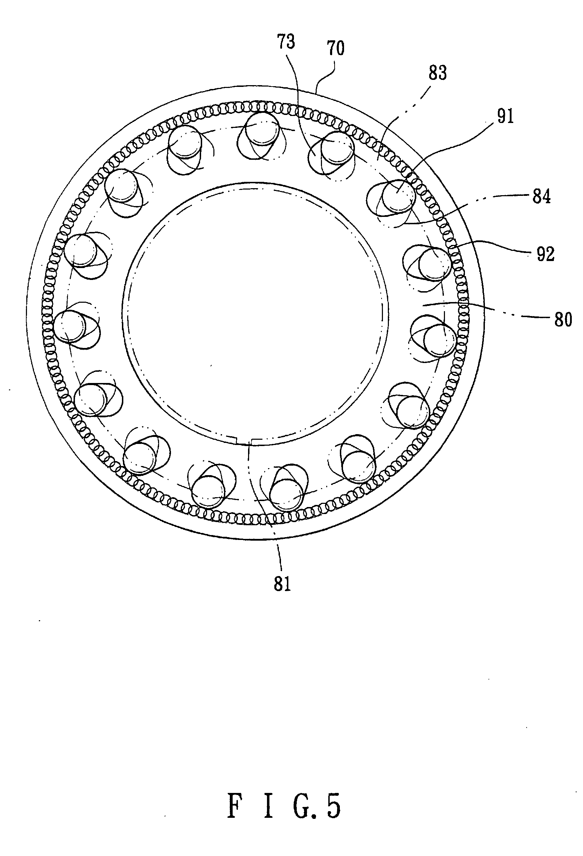

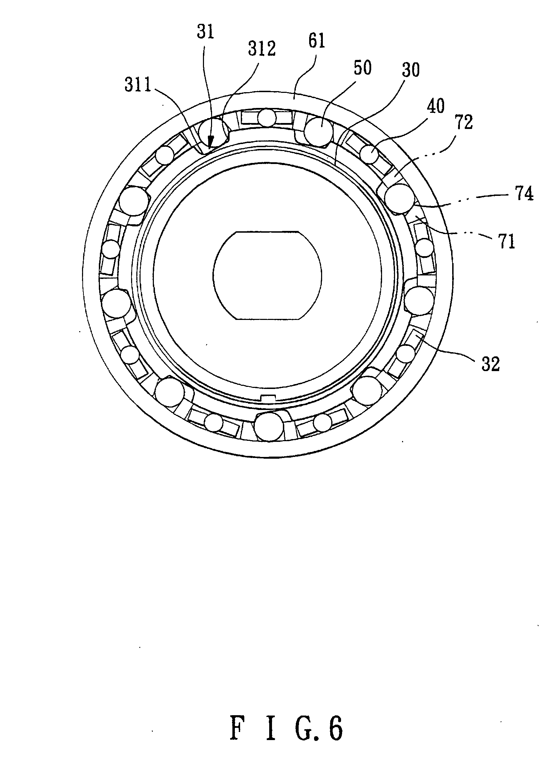

Referring to Figs. 3 and 5, when the power transmission device 21 is rotated by the belt and the input shaft 20 introduces a force to the sleeve 30, the second ring member 80 is co-rotated with the sleeve 30. The balls 91 is moved radially outward by eccentric force and the first ring member 70 is rotated relative to the second ring member 80 by the outward moving balls 91 as shown in Fig. 5. Thus, the balls 91 are received in the first slots 73. Referring to Fig. 6, the rotation of the first ring member 70 relative to the second ring member 80 shifts the first blocks 71 and the second blocks 72 to shift the rollers 50 toward the shallow corners 312 so that the rollers 50 are moved outward and contact the flange 61 of the driving disk 60 and rotate the driving disk 60. The rotation of the driving disk 60 drives the output shaft 10. In other words, by choosing proper annular springs 92, the clutch device can be used at lower r.p.m..

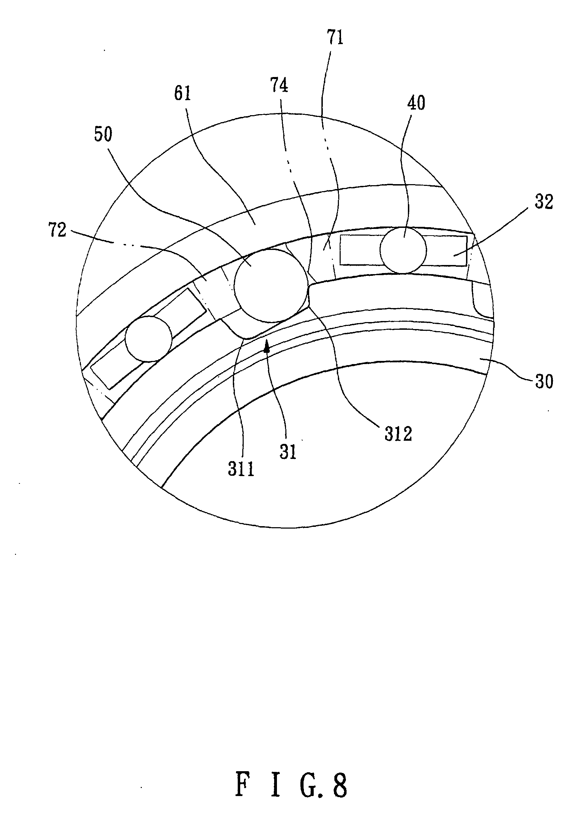

If the input force is not large enough, for example when the motorbike employing the clutch device is pushed by the rider, the rollers 50 is not moved toward the shallow comers 312, so that the flange 61 of the driving disk 60 is freely rotated on the rolling members 40 and is not rotated or rotated slightly by the friction and this will not activate the parts in the mechanism. This is a neutral position and if it is used on a car, the wheel is rotated freely without activating parts in the clutch device. As shown in Figs. 6 and 8, when the input force is large enough, the second ring member 80 is rotated and the eccentric force push the balls 91 in the second slots 84 to make the first ring member 70 to rotate an angle. The rollers 50 are shifted by the first blocks 71 and the second blocks 72 and enter the shallow comers 312 and contact against the flange 61 of the driving disk 60 so that the driving disk 60 is rotated and drives the output shaft 10. Accordingly, the different specifications of the annular spring 92 and the balls 91 decide the clutch timing and initial speed to function the clutch device.

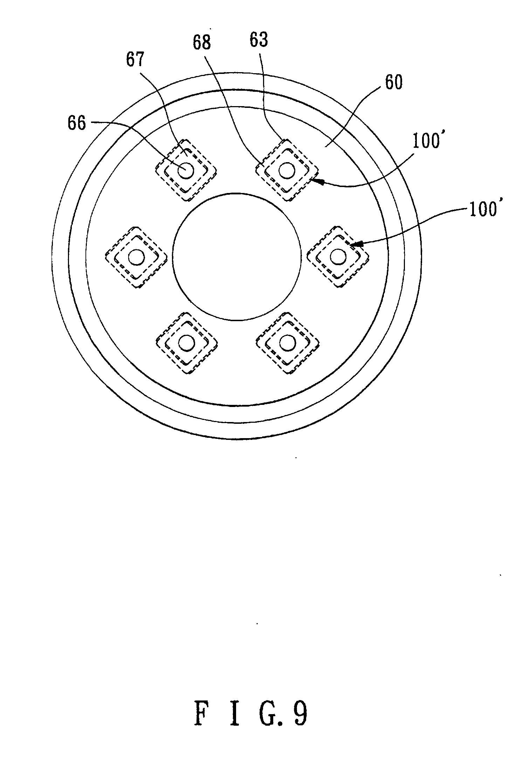

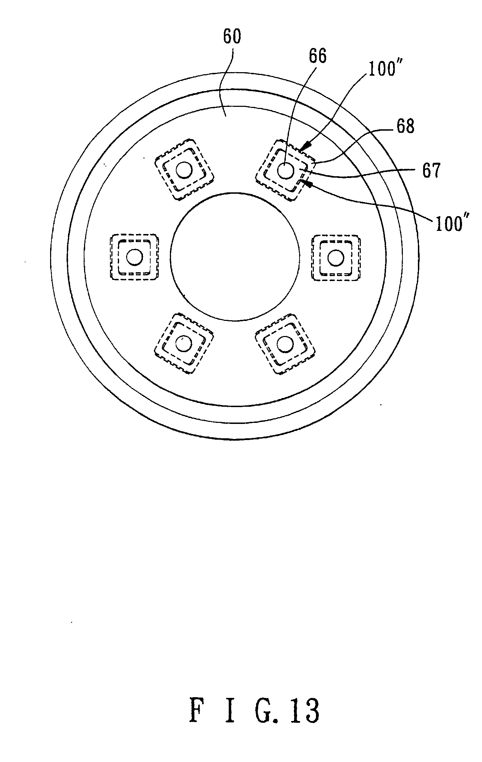

As shown in Figs. 1, 2, 9 and 11, the co-axial requirement between the driving disk 60 and the output shaft 10 is necessary so that a gap 100' (Fig. 9) and 100" (Fig. 13) are defined between the rectangular hole 63, the block 67 and the rectangular retainer 68 so as to function a self-adjustment to let the driving disk 60 and the output shaft 10 are co-axially rotated.

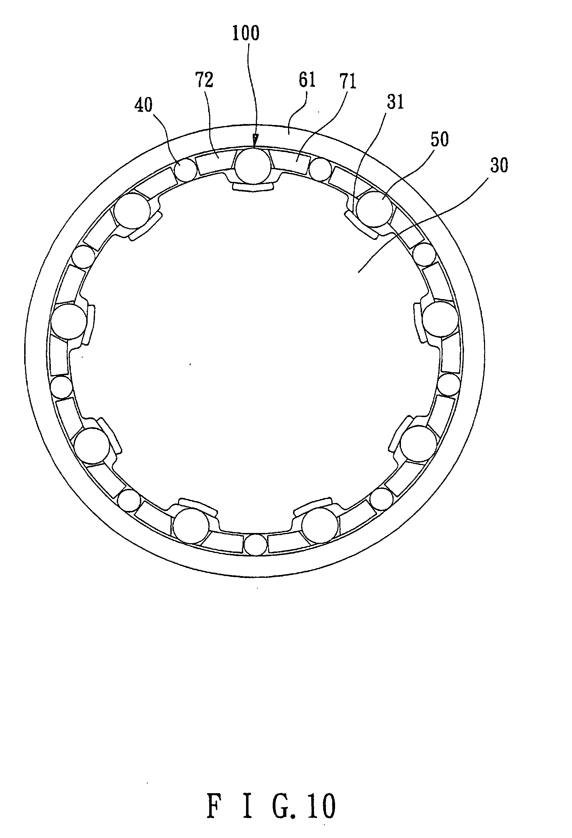

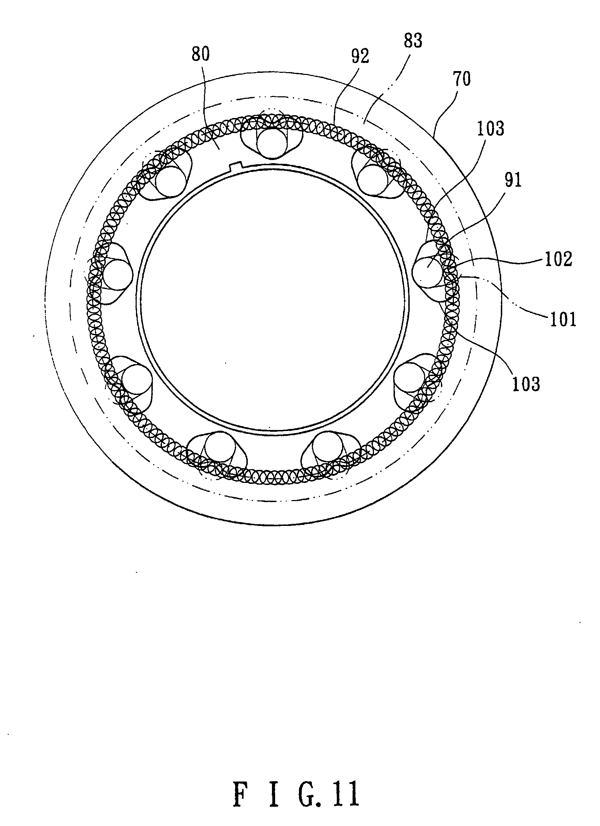

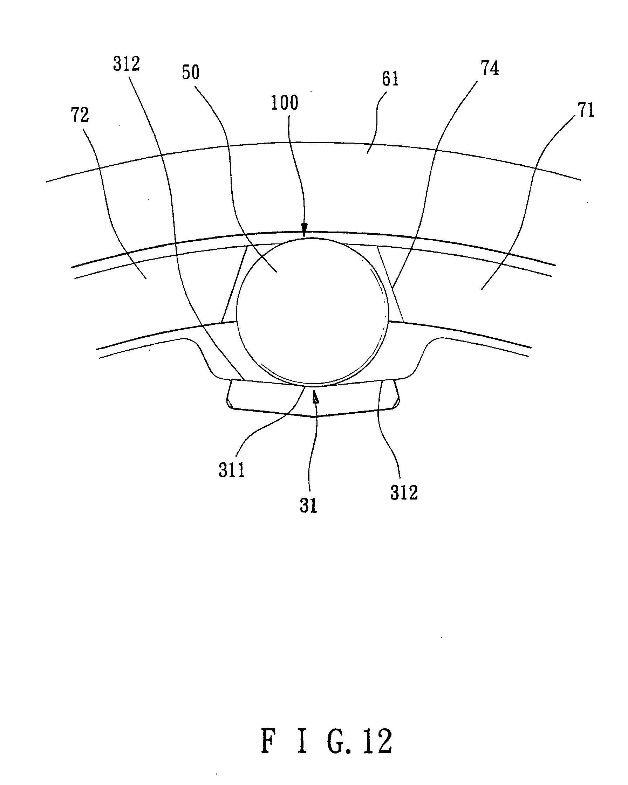

Figures 10 and 12 show that each of the first blocks 71 and the second blocks 72 both have an inclined surface and the recesses 31 has two identical comers 312 with a central recessed area 311 connected therebetween. The central recessed area 311 is shallower than the two identical comers 312. The roller 50 is rested in the recessed area 311 when no eccentric force is applied and is pushed to one of the corners 312 by the eccentric force to drive the driving disk 60. The first slots in the first ring member 70 are radial slots 101 as shown in Fig. 11 and the second slots in the second ring member 80 have two extension portions 102, 103 which are located on two sides of the radial slots in the first member 70. The pair of two extension portions 102, 103 and the first slot located between the two extension portions 102, 103 have a common end which communicates with the first slot and said two extension portions 102, 103. The ball 91 is received in the common end when no eccentric force is applied to the ball 91. The ball 91 can be shifted to either of the two extension portions 102, 103 when the input shaft 20 is rotated. By the arrangement, the clutch device can be operated in two opposite directions.

When the vehicle employing the clutch device is moving on a down slope, if the input shaft 20 is rotated counter clockwise, the number of the revolutions of the driving disk 60 is higher than that of the sleeve 30, the sleeve 30 is slower relative to the first ring member 70 which has an initial rotating action with the vehicle. For the sleeve 30, the first member 70 is rotated to shift the rollers 50 from the shallow corners 312 to the deep comers 311. The sleeve 30 is then disengaged from the driving disk 60. This result is also reached when braking the vehicle. By this feature, the parts in the clutch device will not be damaged.

While we have shown and described various embodiments in accordance with the present invention, it should be clear to those skilled in the art that further embodiments may be made without departing from the scope and spirit of the present invention.

## Claims

1. A clutch device comprising:
an input shaft connected to a power transmission device;
an output shaft connected to said input shaft;
a sleeve connected to said input shaft and having recesses defined in an outer periphery of said sleeve, each recess having a deep corner and a shallow comer;
a plurality of rollers respectively received in said recesses;
a driving disk having a flange extending from a periphery of said driving disk and said sleeve enclosed by said flange;
a first ring member rotatably mounted to said sleeve and a plurality pairs of first block and second block extending from a first side of said ring member, each one of said rollers located between respective one pair of said pairs of first block and second block, a plurality of first slots defined radially in a second side of said first ring member and located inclinedly at an angle relative to a radius of said first ring member;
a second ring member fixedly connected to said sleeve and a plurality of second slots defined radially and inclinedly at an angle relative to a radius of said second ring member in a side facing said second side of said first ring member, said first slots communicating with said second slots at two respective ends of said first slot and said second slot so as to define a common space which communicates with said first slot and said second slot, an annular groove defined in said side of said second ring member, and
a positioning assembly comprising a plurality of balls and an annular spring which is received in said annular groove and biasing said balls in said common spaces of said first slots and said second slots.

2. The device as claimed in claim 1, wherein each of said first blocks located besides said shallow comer of said recess and has an inclined surface contacting said roller in said recess.

3. The device as claimed in claim 1 further comprising a plurality of frames retained between said sleeve and said flange of said driving disk, each of said frames having a rolling member which contacts an inner periphery of said flange of said driving disk.

4. The device as claimed in claim 1 further comprising a plurality of rectangular holes defined through said driving disk and each rectangular hole having a rectangular retainer and a rectangular block which is received in said retainer, a gap defined between said rectangular hole, said block and said rectangular retainer, an end member having a tubular portion extending through a central hole in said driving disk and fixedly connected to said output shaft, a plurality of bolts extending through said end member, said rectangular blocks and engaged with a plate which is clamped between said driving disk and said sleeve.

5. The device as claimed in claim 1 further comprising a first keyway defined in said sleeve and said second ring member having a second keyway defined in an inner periphery of said second ring member, a key engaged with said first keyway and said second keyway.

6. A clutch device comprising:
an input shaft connected to a power transmission device;
an output shaft connected to said input shaft;
a sleeve connected to said input shaft and having recesses defined in an outer periphery of said sleeve, each recess having a two corners with a central recessed area connected therebetween, said central recessed area being shallower than said two comers;
a plurality of rollers respectively received in said recesses;
a driving disk having a flange extending from a periphery of said driving disk and said sleeve enclosed by said flange;
a first ring member rotatably mounted to said sleeve and a plurality pairs of first block and second block extending from a first side of said ring member, each one of said rollers located between respective one pair of said pairs of first block and second block, a plurality of first slots defined radially in a second side of said first ring member;
a second ring member fixedly connected to said sleeve and a plurality pairs of second slots defined radially and inclinedly at an angle relative a radius of said second ring member in a side facing said second side of said first ring member, said parts of second slots located on two sides of corresponding one of said first slots of first ring member, said pair second slots and said first slot located between said two second slots having a common end which communicates with said first slot and said second slots, an annular groove defined in said side of said second ring member, and
a positioning assembly comprising a plurality of balls and an annular spring which is received in said annular groove and biasing said balls in said common ends of said first slots and said second slots.

7. The device as claimed in claim 6 further comprising a plurality of frames retained between said sleeve and said flange of said driving disk, each of said frames having a rolling member which contacts an inner periphery of said flange of said driving disk.

8. The device as claimed in claim 6 further comprising a plurality of rectangular holes defined through said driving disk and each rectangular hole having a rectangular retainer and a rectangular block which is received in said retainer, a gap defined between said rectangular hole, said block and said rectangular retainer, an end member having a tubular portion extending through a central hole in said driving disk and fixedly connected to said output shaft, a plurality of bolts extending through said end member, said rectangular blocks and engaged with a plate which is clamped between said driving disk and said sleeve.

9. The device as claimed in claim 6 further comprising a first keyway defined in said sleeve and said second ring member having a second keyway defined in an inner periphery of said second ring member, a key engaged with said first keyway and said second keyway.
